# EUROPEAN PATENT APPLICATION

(11) **EP 2 763 097 A2**
(43) Date of publication of application: **06.08.2014**
(21) Application number: 12836821.4
(22) Date of filing: 24.09.2012
(51) Int. Cl.: G06Q 30/02

(54) **METHOD OF PROVIDING A PERSONALIZED ADVERTISEMENT IN A RECEIVER**

(30) Priority: 26.09.2011 KR 20110096671
(71) Applicant: Anypoint Media Group, Burbank, CA 91505 (US)
(72) Inventor: BAEK, Wonjang, Gyeonggi-do 463-731 (KR)
(74) Representative: Müller, Wolfram Hubertus
(86) International application number: PCT/KR2012/007637
(87) International publication number: WO 2013/048068

(57) **Abstract**

The present invention relates to a method of providing a personalized advertisement performed in a receiver which receives and provides a broadcast signal, the method including the steps of: (a) previously preparing so as to be able to provide at least a portion of the personalized advertisement without a time delay in the receiver; (b) receiving a synchronization signal; and (c) providing the individualized advertisement based on the synchronization signal. According to the present invention, the personalized advertisement can be provided without a time delay based on the synchronization signal in the receiver which receives and provides a broadcast signal.

## Description

### [TECHNICAL FIELD]

The present invention relates to a method for providing a personalized advertisement by a receiver; and more particularly, to a method for providing a personalized advertisement by a receiver without delay according to a synchronization signal wherein the receiver is configured to receive a broadcasting signal and provide the received signal.

### [BACKGROUND ART]

A broadcasting environment has been changed in accordance with advances in technologies and changes in demands of viewers. The broadcasting environment has been converted from a conventional analog broadcasting into a digital broadcasting. Hereinafter, in this specification, the "digital broadcasting" refers to digital terrestrial broadcasting, digital cable broadcasting, digital satellite broadcasting, so-called IPTV services using a high-speed communication network, terrestrial and satellite DMB services, VOD services provided through a communication network, and the like.

In addition, a "broadcasting signal" refers to a signal used for digital or analog broadcasting. In general, the "broadcasting signal" includes a broadcast program and at least one broadcast advertisement.

In the conventional analog broadcasting or digital broadcasting, at least one broadcast advertisement is transmitted together with the broadcast program to a receiver through a broadcasting network or a communication network, and the receiver signal-processes the broadcast program and the broadcast advertisement to provide the signal-processed program and the broadcast advertisement to viewers in chronological order.

For example, in a case of terrestrial digital broadcasting, a terrestrial digital broadcasting provider transmits a broadcasting signal including the broadcast program and the at least one broadcast advertisement to the receiver through the broadcasting network.

The receiver receives and signal-processes the broadcasting signal, and provides the signal-processed signals to the viewers.

In particular, in the case of the terrestrial digital broadcasting, the receiver only receives and signal-processes the broadcasting signal to provide the signal-processed signal. However, the receiver cannot provide a personalized advertisement.

In order to provide the personalized advertisement in the terrestrial digital broadcasting, the terrestrial digital broadcasting provider should insert a large number of advertisements suitable for each individual into the broadcasting signal to thereby transmit the broadcasting signal to the receiver. However, due to a limitation of a bandwidth used for the broadcasting signal, it is practically impossible to insert the large number of advertisements suitable for each individual into the broadcasting signal to be transmitted.

Even in other digital broadcasting, it is practically impossible to insert the large number of advertisements suitable for each individual into the broadcasting signal to be transmitted due to a limitation of a bandwidth used for the broadcasting signal.

In case of cable broadcasting, digital cable broadcasting, IPTV services or the like where the supplier of the broadcast program is different from the transmitter of the broadcasting signal, different advertisements may be provided for different regions.

In some cases, the supplier of the broadcast program (hereinafter also referred to as "program provider") and the transmitter of the broadcasting signal (hereinafter also referred to as "network provider") may use their own advertisement times respectively allocated for providing their own advertisements to the receiver. The program provider may provide the broadcast program for, e.g., 50 minutes and the advertisement for, e.g., the remaining 10 minutes. In this case, the program provider may use 8 minutes of his own 10-minute advertisement time for providing advertisements selected by himself, and allocate the remaining 2 minutes to the network provider so that the network provider may use the allocated 2 minutes freely. Then, the network provider provides the receiver with a broadcasting signal including the broadcast program supplied by the program provider, the advertisements selected by the program provider and an advertisement for the allocated 2 minutes.

In the case of the cable broadcasting or the digital cable broadcasting, the network provider exists for each region. The network provider of each region provides the advertisement for the allocated 2 minutes. The advertisements provided by the network provider may include local advertisements for local companies.

However, even in case of the local advertisements, it is also practically impossible to provide advertisements specialized for each receiver. As described above, it is practically impossible to insert a large number of advertisements suitable for each individual into the broadcasting signal to be transmitted due to the limitation of bandwidth for the broadcasting signal.

The network provider provides the local advertisements according to a specified signal transmitted by the program provider. However, it is difficult to perform an accurate synchronization with respect to the specified signal because the specified signal is transmitted as a cue tone.

As the prior art for improving these shortcomings, there is Korean Patent Laid-open Publication No. 10-2009-0015836 entitled "Method for Providing Personalized Advertisement" which has been filed by Alticast Inc., and published on February 2, 2009. In the Korean Patent Laid-open Publication No. 10-2009-0015836, an advertisement system that stores a plurality of advertisements and advertisement control data matched with each of the advertisements is disclosed. The advertisement system transmits the plurality of advertisements and the advertisement control data matched with each of the advertisements to a user receiver, and the user receiver compares a user parameter and each advertisement control data to provide personalized advertisements.

However, in Korean Patent Laid-open Publication No. 10-2009-0015836, a configuration of providing the plurality of advertisements and the advertisement control data separately from a broadcasting signal is disclosed, but the plurality of advertisements and the advertisement control data are transmitted to the receiver side in the same manner as described above, and therefore the receiver should receive all advertisements even including advertisements not suitable for the receiver.

In addition, in Korean Patent Laid-open Publication No. 10-2010-0069379 entitled "Method and System for Providing Local Targeting Advertisements" which has been filed by KT Inc., and published on June 24, 2010, a method for providing local targeting advertisements is disclosed.

In the Korean Patent Laid-open Publication No. 10-2010-0069379, a configuration in which advertisement attribute codes are set in advertisements based on regions, and a set-top box downloads and provides an advertisement suitable for its own regional code is disclosed.

However, in this case, since each set-top box downloads and provides the advertisement suitable for its own regional code together with the broadcast program, a large load is generated in the network and it is difficult to provide advertisements without delay. In addition, in order to compare regional codes, additional configurations such as a set-top box management server and the like are required.

### [REFERENCE DOCUMENTS]

### [PATENT DOCUMENTS]

1. Korean Patent Laid-open Publication No. 10-2009-0015836
2. Korean Patent Laid-open Publication No. 10-2010-0069379

### [DISCLOSURE]

### [TECHNICAL PROBLEM TO BE SOLVED]

The present invention is directed to providing a method for providing a personalized advertisement by a receiver configured to receive and provide a broadcasting signal, wherein the personalized advertisement may be provided by the receiver without delay according to a synchronization signal.

### [TECHNICAL SOLUTION]

According to one aspect of the present invention, there is provided a method for providing a personalized advertisement by a receiver configured to receive and provide a broadcasting signal, the method including: (a) preparing at least a portion of the personalized advertisement in advance to be provided without delay by the receiver; (b) receiving a synchronization signal; and (c) providing the personalized advertisement according to the synchronization signal.

The step (a) may include receiving and storing the personalized advertisement from a personalized advertisement supplying device according to at least one of identification information of the receiver, identification information of a user of the receiver, location information of the receiver and current time information.

The step (a) may include subjecting to signal-processing and loading at least a portion of the personalized advertisement into a memory of the receiver in advance.

The broadcasting signal may include a broadcast program and at least one broadcast advertisement, and the synchronization signal may identify at least a portion of a time slot for providing the at least one broadcast advertisement.

The synchronization signal may be generated by at least one of a transmitter of the broadcasting signal and a supplier of the broadcast program.

The step (b) may include receiving the synchronization signal included in the broadcasting signal.

The step (b) may include receiving the synchronization signal through a communication network different from a broadcasting network carrying the broadcasting signal.

The synchronization signal may be inserted in the broadcasting signal and is transmitted to the receiver one or more times.

The synchronization signal may include a start time and a duration of a time slot for providing the personalized advertisement.

The step (c) may include: extracting the start time and the duration from the synchronization signal; starting the personalized advertisement at the start time; and terminating the personalized advertisement after the duration elapses and then providing the broadcasting signal.

The step (c) may further include preparing to provide at least a portion of the broadcasting signal without delay by the receiver by subjecting at least the portion of the broadcasting signal to signal processing before the duration elapses.

The synchronization signal may include: a first synchronization signal indicating a start time of a time slot for providing the personalized advertisement; and a second synchronization signal indicating an end time of the time slot.

The step (c) may include: extracting the start time from the first synchronization signal; starting the personalized advertisement at the start time; extracting the end time from the second synchronization signal; and terminating the personalized advertisement at the end time and then providing the broadcasting signal.

The step (c) may further include preparing to provide at least a portion of the broadcasting signal without delay by the receiver by subjecting at least the portion of the broadcasting signal to signal processing before the end time.

The method may further include: (d) storing history data after providing the personalized advertisement; and (e) transmitting the history data to a predetermined device.

The personalized advertisement may include a data application, the step (a) may include running the data application in a background mode, and the step (c) may include: converting a mode of the data application into a foreground mode and running the data application in the foreground mode; and terminating the data application running in the foreground mode and converting the mode of the data application into the background mode or killing the data application.

The broadcasting signal may be a digital broadcasting signal.

### [ADVANTAGEOUS EFFECTS]

According to the present invention, a personalized advertisement may be provided without delay according to a synchronization signal by a receiver configured to receive and provide a broadcasting signal.

In particular, a transmitter of the broadcasting signal or a supplier of a broadcast program has only to provide the synchronization signal to the receiver, and therefore a network load used for the personalized advertisement can be minimized.

Further, the receiver may prepare the personalized advertisement in advance and then provide the prepared personalized advertisement according to the synchronization signal, and therefore the personalized advertisement can be provided to viewers without delay. That is, the receiver can extract a time slot during which the personalized advertisement is to be provided accurately according to the synchronization signal before providing the personalized advertisement.

In case where a data application is provided, the receiver can execute the data application in a background mode in advance, and then convert the mode of the data application to a foreground mode in accordance with the synchronization signal and execute the converted data application, and therefore time delay caused by running the data application can be minimized.

Further, the transmitter of the broadcasting signal or the supplier of the broadcast program can provide the synchronization signal, and therefore the personalized advertisement can be provided to viewers within an advertisement time allocated to themselves, i.e., the transmitter of the broadcasting signal or the supplier of the broadcast program.

In addition, profits may be created by the transmitter of the broadcasting signal or the supplier of the broadcast program by providing the personalized advertisement.

### [DESCRIPTION OF DRAWINGS]

FIG. 1 is a diagram showing a system environment wherein a method for providing a personalized advertisement is executed by a receiver according to an embodiment of the present invention;
FIG. 2 is a flowchart illustrating the method for providing a personalized advertisement by a receiver according to an embodiment of the present invention;
FIG. 3 is a flowchart illustrating step S100 in the method for providing a personalized advertisement by a receiver according to an embodiment of the present invention;
FIG. 4 is a flowchart illustrating step S200 in the method for providing a personalized advertisement by a receiver according to an embodiment of the present invention;
FIG. 5 is a flowchart illustrating step S300 in the method for providing a personalized advertisement by a receiver according to an embodiment of the present invention;
FIG. 6 is another flowchart illustrating step S300 in the method for providing a personalized advertisement by a receiver according to an embodiment of the present invention; and
FIG. 7 is a flowchart illustrating a process of providing a data application in the method for providing a personalized advertisement by a receiver according to an embodiment of the present invention.

### [BEST MODE]

Hereinafter, examples of the method for providing the personalized advertisement by the receiver according to an embodiment of the present invention will be described in more detail with reference to the accompanying drawings.

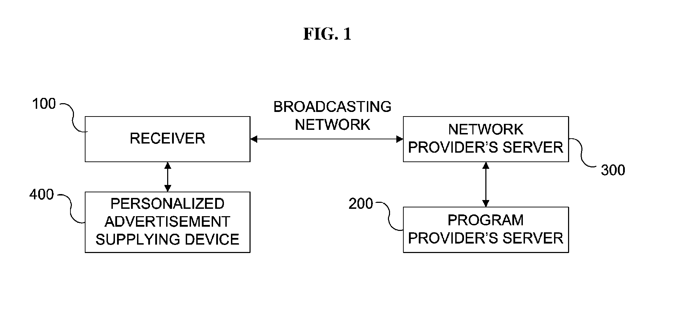

FIG. 1 is a diagram showing a system environment wherein a method for providing a personalized advertisement is executed by a receiver according to an embodiment of the present invention.

Referring to FIG. 1, the system environment wherein the method for providing the personalized advertisement is executed by the receiver according to an embodiment of the present invention includes a receiver 100, a program provider's server 200, a network provider's server 300, and a personalized advertisement supplying device 400.

The receiver 100 receives and signal-processes a broadcasting signal to provide the signal-processed signal. The broadcasting signal includes a broadcast program and at least one broadcast advertisement. Further, the receiver 100 may receive a personalized advertisement from the personalized advertisement supplying device 400 and store the received personalized advertisement, and then provide the stored personalized advertisement according to a synchronization signal. The receiver 100 may be provided, for example, in the form of a set-top box, or may be formed as a single body with a display device.

The program provider's server 200 provides the broadcast program to the network provider's server 300. The network provider's server 300 transmits the broadcasting signal to the receiver 100. At least one of the program provider's server 200 and the network provider's server 300 may insert at least one broadcast advertisement into the broadcasting signal. Also, the at least one of the program provider's server 200 and the network provider's server 300 may generate a synchronization signal. Each of the program provider's server 200 and the network provider's server 300 may be managed by different entities or the same entity.

The personalized advertisement supplying device 400 stores a plurality of personalized advertisements. The personalized advertisement supplying device 400 may transmit a personalized advertisement suitable for the receiver to the receiver100 in accordance with a request from the receiver100.

The personalized advertisement supplying device 400 may be managed by an entity that manages at least one of the program provider's server 200 and the network provider's server 300. However, it is preferable that the personalized advertisement supplying device 400 is managed by an entity different therefrom.

Hereinafter, the method for providing a personalized advertisement by the receiver according to an embodiment of the present invention will be described in more detail with reference to the system environment of FIG. 1.

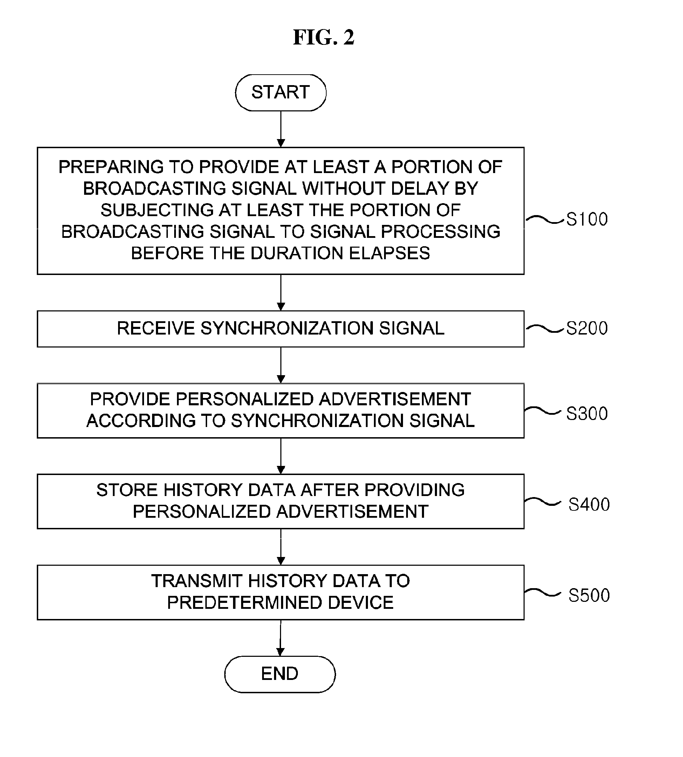

FIG. 2 is a flowchart illustrating the method for providing a personalized advertisement by a receiver according to an embodiment of the present invention.

First, step S100, the receiver 100 prepares at least a portion of the personalized advertisement in advance so that at least the prepared portion of the personalized advertisement can be provided without delay by the receiver 100.

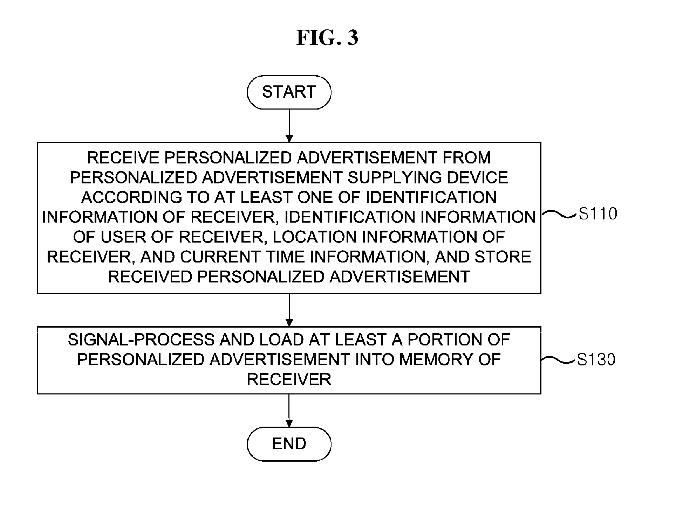

Step S100 will be described in more detail with reference to FIG. 3.

FIG. 3 is a flowchart illustrating step S100 in the method for providing a personalized advertisement by a receiver according to an embodiment of the present invention.

Referring to FIG. 3, in step S110, the receiver 100 receives the personalized advertisement from the personalized advertisement supplying device 400 according to at least one of identification information of the receiver 100, identification information of a user of the receiver 100, location information of the receiver 100, and current time information. Then, the receiver 100 stores the received personalized advertisement.

Conventionally, a personalized advertisement is received together with the broadcast program or a large number of advertisements are received together with the broadcast program, thereby generating a large load in the broadcasting network. However, according to an embodiment of the present invention, the personalized advertisement may be received in advance through step S110. Further, since the personalized advertisement is stored by the receiver 100 in advance through step S110, the personalized advertisement may be viewed with a minimized time delay.

In order to further shorten the time delay, in step S130, at least a portion of the personalized advertisement may be signal-processed and then loaded into a memory of the receiver 100.

That is, the personalized advertisement received through step S110 may be stored in a memory having a high data transmission rate rather than a storage device such as a hard disk having a low data transmission rate. In case where the personalized advertisement has a data format of MPEG for example, the personalized advertisement may be signal-processed in advance and then the signal-processed advertisement may be loaded into the memory. In this manner, a time required for providing the personalized advertisement may be further shortened through step S130.

Referring again to FIG.2, in step S200, the receiver 100 receives a synchronization signal.

As described above, the broadcasting signal includes the broadcast program and at least one broadcast advertisement. The synchronization signal identifies a time slot corresponding to at least a portion of a time slot during which at least one broadcast advertisement included in the broadcasting signal is to be provided. According to the present invention, the exact time slot for providing the personalized advertisement can be extracted from the synchronization signal.

The synchronization signal may be generated by at least one of a transmitter of the broadcasting signal and a supplier of the broadcast program.

For example, the transmitter of the broadcasting signal may use at least a portion of an allocated advertisement time for providing the personalized advertisement according to the method of the embodiment of the present invention.

Further, the supplier of the broadcast program may also use at least a portion of an allocated advertisement time for providing the personalized advertisement according to the method of the embodiment of the present invention.

Accordingly, at least one of the transmitter of the broadcasting signal and the supplier of the broadcast program may generate the synchronization signal.

As described above, the broadcasting signal is a signal used for digital or analog broadcasting.

In case where the method according to the embodiment of the present invention is applied to analog broadcasting, the synchronization signal may be transmitted to the receiver 100 by a cue tone, or in the form of caption data or sound multiplex broadcasting data.

In this case, the receiver 100 determines whether the synchronization signal is transmitted through a broadcasting network when receiving the cue tone, the caption data, or sound multiplex broadcasting data.

In case where the method according to the embodiment of the present invention is applied to digital broadcasting, the synchronization signal may be transmitted in the form of a packet. The receiver 100 may receive the synchronization signal by signal-processing the packet. Also in the digital broadcasting, the synchronization signal may be provided in the form of a cue tone, caption data, or sound multiplex broadcasting data. In this case, the receiver 100 signal-processes the broadcasting signal and recognizes the signal-processed signal as the synchronization signal if the cue tone, the caption data or the sound multiplex broadcasting data is detected.

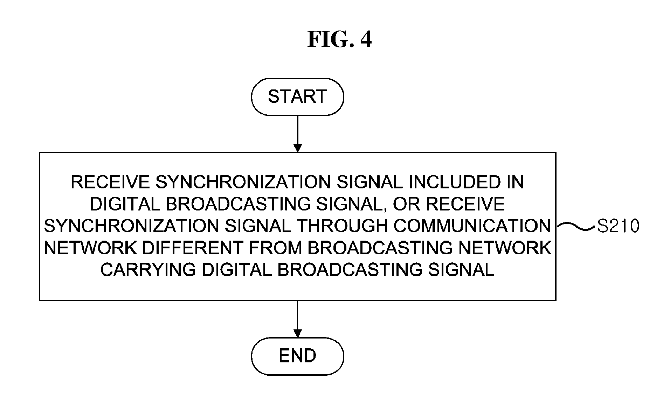

Step S200 will be described in more detail with reference to FIG. 4.

FIG. 4 is a flowchart illustrating step S200 in the method for providing a personalized advertisement by a receiver according to an embodiment of the present invention.

Referring to FIG.4, in step S210, the receiver 100 receives the synchronization signal included in the broadcasting signal. Alternatively, in step S210, the receiver 100 may receive the synchronization signal through a communication network different from a broadcasting network carrying the broadcasting signal.

Preferably, the synchronization signal is included in the broadcasting signal to be transmitted to the receiver 100.

For example, the synchronization signal generated by at least one of the transmitter of the broadcasting signal and the supplier of the broadcast program may be inserted in the broadcasting signal to be transmitted to the receiver 100.

Thus, the receiver 100 may be configured to detect the synchronization signal by receiving and signal-processing the broadcasting signal.

Alternatively, the synchronization signal generated by at least one of the transmitter of the broadcasting signal and the supplier of the broadcast program may be transmitted to the receiver 100 through a communication network different from the broadcasting network through which the broadcasting signal is transmitted. The synchronization signal may be transmitted through the communication network when a delay caused by the communication network is short, for example. The receiver 100 receives the synchronization signal through communications with at least one of the program provider's server 200 and the network provider's server 300. However, in this case, a data load may be increased because the receiver 100 needs to perform communications with the at least one of the program provider's server 200 and the network provider's server 300.

The synchronization signal may be inserted in the broadcasting signal to be transmitted to the receiver 100 one or more times. Since the synchronization signal may be transmitted more than one time, it is possible to prevent a case where the receiver 100 cannot receive the synchronization signal due to a reception error.

Also in case where the synchronization signal are transmitted to the receiver 100 through the communication network, the program provider's server 200 and/or the network provider's server 300 may transmit the synchronization signal to the receiver 100 one or more times in the same manner as above.

Referring again to FIG. 2, in step S300, the receiver 100 provides a personalized advertisement according to the synchronization signal received in step S200.

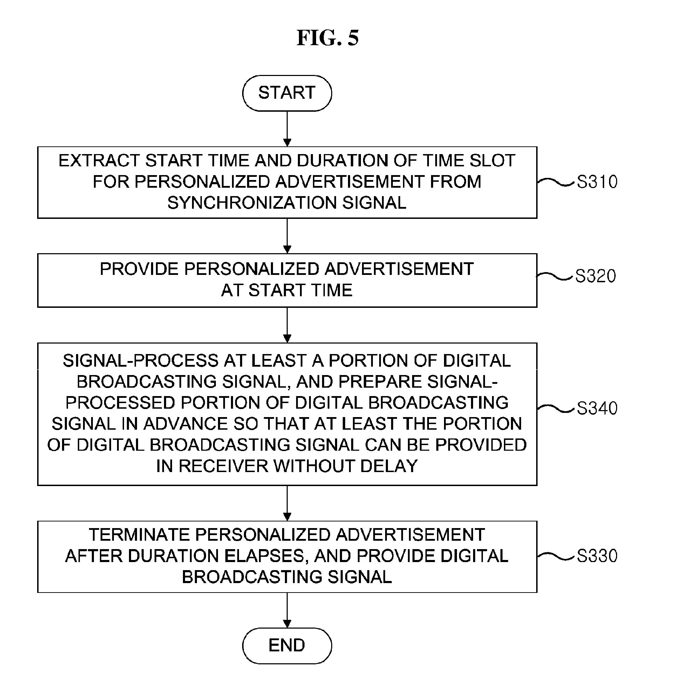

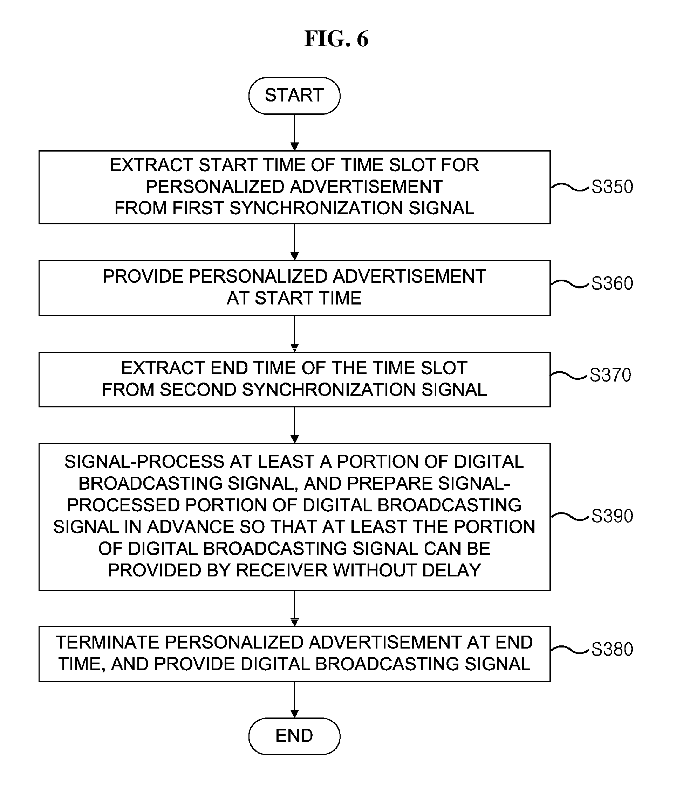

Step S300 will be described in more detail with reference to FIGS. 5 and 6.

FIG. 5 is a flowchart illustrating step S300 in the method for providing a personalized advertisement by a receiver according to an embodiment of the present invention.

The synchronization signal may include a start time and a duration of a time slot for providing the personalized advertisement.

In step S310, the receiver 100 extracts the start time and the duration of the time slot for providing the personalized advertisement from the synchronization signal received through step S200.

In step S320, the receiver 100 starts providing the personalized advertisement prepared in advance in step S100 at the start time, wherein the start time is extracted in step S310.

In step S330, after the duration elapses, the receiver 100 stops providing the personalized advertisement, and provides the broadcasting signal instead.

Further, step S340 may preferably be performed in order to minimize a time delay until the broadcasting signal is provided. In step S340, at least a portion of the broadcasting signal may be signal-processed and prepared in advance so that at least the prepared portion of the broadcasting signal can be provided by the receiver 100 without delay. Step S340 may be performed before step S330 or before the above-mentioned duration elapses.

According to the example of step S300 which has been described with reference to FIG. 5, the start time and the duration of the personalized advertisement are extracted from the synchronization signal so as to provide the personalized advertisement.

The receiver 100 may preferably provide the personalized advertisement in a manner optimized for the duration.

If the personalized advertisement includes, for example, six sub-advertisements of 30 seconds and the duration for the personalized advertisement is two minutes in total, the receiver 100 may select four sub-advertisements from the six sub-advertisements and provide the selected sub-advertisements within the duration. Such selection may be made according to the sequence in which six sub-advertisements are stored or received, or according to the priorities of the six sub-advertisements.

In addition, the receiver 100 may signal-process and prepare at least a portion of the broadcasting signal in advance so that at least the prepared portion of the broadcasting signal can be provided without delay by the receiver 100 before the duration elapses. For example, the broadcasting signal may be received and signal-processed to be loaded into the memory of the receiver 100, and then the broadcasting signal may be fetched from the memory to that the broadcast program or the broadcast advertisement can be viewed immediately after the duration elapses.

Thus, the time delay can be minimized when switching from the personalized advertisement to the broadcast program or broadcast advertisement.

FIG. 6 is another flowchart illustrating step S300 in the method for providing a personalized advertisement by a receiver according to an embodiment of the present invention.

In the example of step S300 which has been described with reference to FIG. 5, the synchronization signal may include the start time and the duration of the time slot for providing the personalized advertisement.

However, in another example of step S300, the synchronization signal include a first synchronization signal indicating the start time of the time slot for providing the personalized advertisement and a second synchronization signal indicating an end time of the time slot for providing the personalized advertisement.

The first synchronization signal is transmitted to the receiver 100 before the start time, and the second synchronization signal is transmitted to the receiver 100 before the end time.

In step S350, the receiver 100 extracts the start time of the time slot from the first synchronization signal.

In step S360, the receiver 100 starts providing the personalized advertisement prepared in advance in step S100 at the start time, wherein the start time is extracted in step S350.

In step S370, the receiver 100 extracts the end time of the time slot from the second synchronization signal. Although step S370 is shown to be subsequent to step S360 in the drawing, but may also be performed prior to step S360.

In step S380, the receiver 100 stops providing the personalized advertisement at the end time, and provides the broadcasting signal instead.

Further, step S390 may preferably be performed in order to minimize a time delay until the broadcasting signal is provided. In step S390, at least a portion of the broadcasting signal may be signal-processed and prepared in advance so that at least the prepared portion of the broadcasting signal can be provided by the receiver 100 without delay. Step S390 may be performed before step S380 or before the above-mentioned duration elapses.

The example of step S300 shown in FIG. 6 is basically same as the example of step S300 shown in FIG. 5 except that the synchronization signal includes the first synchronization signal and the second synchronization signal.

The method according to the embodiment of the present invention may further include another step of calculating an advertising cost or the like after providing the personalized advertisement.

Referring again to FIG. 2, in step S400, the receiver 100 provides the personalized advertisement through step S300, and then stores history data related thereto.

That is, after a personalized advertisement is provided to viewers by the receiver 100, the identification information of the personalized advertisement, the providing time of the personalized advertisement and the like are stored as the history data. The history data may further include the identification information of the receiver 100.

In step S500, the receiver 100 transmits the history data stored through step S400 to a predetermined device.

For example, the receiver 100 may transmit the history data to at least one of the program provider's server 200, the network provider's server 300 and the personalized advertisement supplying device 400.

The entity that manages the program provider's server 200, the network provider's server 300 or the personalized advertisement supplying device 400 may calculate the adverting cost for the personalized advertisement based on, e.g., the conditions of contracts with advertisers determined based on the above-mentioned history data.

### [Mode for Invention]

In the method according to the embodiment of the present invention, the personalized advertisement may include a data application.

That is, the data application according to a data application standard of digital broadcasting, for example, may be provided as the personalized advertisement.

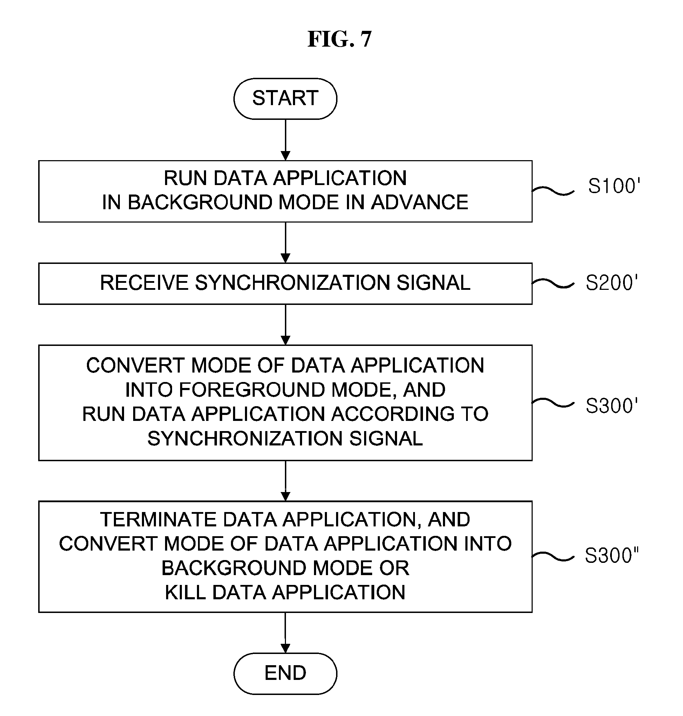

FIG. 7 is a flowchart illustrating a process of providing a data application in the method for providing a personalized advertisement by a receiver according to the embodiment of the present invention.

In step S100', the receiver 100 executes the data application in a background mode.

The data application may be inserted in the broadcasting signal in the form of carousel to be transmitted to the receiver 100, or may be transmitted through the communication network.

In step S200', the synchronization signal are received by the receiver 100.

In step S300', the mode of the data application is converted into a foreground mode, and the data application is executed according to the synchronization signal received in step S200'.

In S300", the receiver 100 terminates the data application in response to a user's request or according to the end of the providing time of the data application, and converts the mode of the data application into the background mode or kills the data application. If the data application is to be executed again, the mode of the data application is converted into the background mode. If the data application is not to be executed again, the data application is killed.

Steps S100', S200', S300' and S300" are basically same as steps S100, S200 and S300, respectively, shown in FIG. 2 except that the personalized advertisement includes the data application. Therefore, detailed descriptions thereof will be omitted.

Although the example embodiments of the present invention have been described in detail, it should be understood by those skilled in the art that various changes, substitutions, and alterations may be made herein without departing from the scope of the invention.

Therefore, it would be understood that the scope of the present invention is not limited to these embodiments, and that the scope of the present invention should be interpreted without departing from the principles of the invention, the scope of which is defined in the claims and their equivalents.

### [INDUSTRIAL APPLICABILITY]

According to the present invention, a personalized advertisement may be provided without delay according to a synchronization signal by a receiver configured to receive and provide a broadcasting signal.

In particular, a transmitter of the broadcasting signal or a supplier of a broadcast program has only to provide the synchronization signal to the receiver, and therefore a network load used for the personalized advertisement can be minimized.

Further, the receiver may prepare the personalized advertisement in advance and then provide the prepared personalized advertisement according to the synchronization signal, and therefore the personalized advertisement can be provided to viewers without delay. That is, the receiver can extract a time slot during which the personalized advertisement is to be provided accurately according to the synchronization signal before providing the personalized advertisement.

In case where a data application is provided, the receiver can execute the data application in a background mode in advance, and then convert the mode of the data application to a foreground mode in accordance with the synchronization signal and execute the converted data application, and therefore time delay caused by running the data application can be minimized.

Further, the transmitter of the broadcasting signal or the supplier of the broadcast program can provide the synchronization signal, and therefore the personalized advertisement can be provided to viewers within an advertisement time allocated to themselves, i.e., the transmitter of the broadcasting signal or the supplier of the broadcast program. In addition, profits may be created by the transmitter of the broadcasting signal or the supplier of the broadcast program by providing the personalized advertisement.

### [EXPLANATION OF REFERENCE CHARACTERS]

100: receiver
200: program provider's server
300: network provider's server
400: personalized advertisement supplying device

## Claims

1. A method for providing a personalized advertisement by a receiver configured to receive and provide a broadcasting signal, the method comprising:
(a) preparing at least a portion of the personalized advertisement in advance to be provided without delay by the receiver;
(b) receiving a synchronization signal; and
(c) providing the personalized advertisement according to the synchronization signal.

2. The method according to claim 1, wherein the step (a) includes receiving and storing the personalized advertisement from a personalized advertisement supplying device according to at least one of identification information of the receiver, identification information of a user of the receiver, location information of the receiver and current time information.

3. The method according to claim 1, wherein the step (a) includes subjecting to signal-processing and loading at least a portion of the personalized advertisement into a memory of the receiver in advance.

4. The method according to claim 1, wherein the broadcasting signal includes a broadcast program and at least one broadcast advertisement, and
the synchronization signal identifies at least a portion of a time slot for providing the at least one broadcast advertisement.

5. The method according to claim 4, wherein the synchronization signal is generated by at least one of a transmitter of the broadcasting signal and a supplier of the broadcast program.

6. The method according to claim 1, wherein the step (b) includes receiving the synchronization signal included in the broadcasting signal.

7. The method according to claim 1, wherein the step (b) includes receiving the synchronization signal through a communication network different from a broadcasting network carrying the broadcasting signal.

8. The method according to claim 1, wherein the synchronization signal is inserted in the broadcasting signal and is transmitted to the receiver one or more times.

9. The method according to claim 1, wherein the synchronization signal includes a start time and a duration of a time slot for providing the personalized advertisement.

10. The method according to claim 9, wherein the step (c) includes:
extracting the start time and the duration from the synchronization signal;
starting the personalized advertisement at the start time; and
terminating the personalized advertisement after the duration elapses and then providing the broadcasting signal.

11. The method according to claim 10, wherein the step (c) further includes preparing to provide at least a portion of the broadcasting signal without delay by the receiver by subjecting at least the portion of the broadcasting signal to signal processing before the duration elapses.

12. The method according to claim 1, wherein the synchronization signal includes:
a first synchronization signal indicating a start time of a time slot for providing the personalized advertisement; and
a second synchronization signal indicating an end time of the time slot.

13. The method according to claim 12, wherein the step (c) includes:
extracting the start time from the first synchronization signal;
starting the personalized advertisement at the start time;
extracting the end time from the second synchronization signal; and
terminating the personalized advertisement at the end time and then providing the broadcasting signal.

14. The method according to claim 13, wherein the step (c) further includes preparing to provide at least a portion of the broadcasting signal without delay by the receiver by subjecting at least the portion of the broadcasting signal to signal processing before the end time.

15. The method according to claim 1, further comprising:
(d) storing history data after providing the personalized advertisement; and
(e) transmitting the history data to a predetermined device.

16. The method according to claim 1, wherein the personalized advertisement includes a data application,
the step (a) includes running the data application in a background mode, and
the step (c) includes:
converting a mode of the data application into a foreground mode and running the data application in the foreground mode; and
terminating the data application running in the foreground mode and converting the mode of the data application into the background mode or killing the data application.

17. The method according to claim 1, wherein the broadcasting signal is a digital broadcasting signal.
